**Europäisches Patentamt**

**European Patent Office**

**Office européen des brevets**

(19)

(11) Veröffentlichungsnummer: **0 085 295**
**B1**

(12) **EUROPÄISCHE PATENTSCHRIFT**

(45) Veröffentlichungstag der Patentschrift:
**23.07.86**

(51) Int. Cl.⁴: **A 23 L 2/38, A 23 L 1/30**

(21) Anmeldenummer: **83100053.4**

(22) Anmeldetag: **05.01.83**

(54) **Getränke und flüssige Nahrungsmittel mit einem geringen Gehalt an Natrium.**

(30) Priorität: **12.01.82 CH 142/82**

(43) Veröffentlichungstag der Anmeldung:
**10.08.83 Patentblatt 83/32**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**DE-A-2 505 717**
**FR-A-2 325 330**
**FR-A-2 450 568**
**GB-A-1 457 968**
**GB-A-1 499 984**
**GB-A-2 037 565**
**US-A-3 215 626**

**ETIKETTEN "SPA REINE", "SPA L'EAU QUI PETILLE", "SPA CITRON"**
**LOUIS VIDAL: "Dictionnaire Vidal", 1966, Seite 701, O.V.P., Paris, FR**

(73) Patentinhaber: **Natrex Diätetika, E. Baltensperger, Im Neutal 194, CH- 4203 Grellingen (CH)**

(72) Erfinder: **Haigis, Erich M., Dr., Im Neutal 194, CH-4203 Grellingen (CH)**
Erfinder: **Baltensperger, Esther, Im Neutal 194, CH-4203 Grellingen (CH)**

## Beschreibung

Die vorliegende Erfindung bezieht sich auf die Herstellung und Anwendung von flüssigen Lebensmitteln, die sich zur Einhaltung einer strikt natriumarmen Diät eignen. Diese flüssigen Nahrungsmittel sind durch einen äusserst geringen Gehalt an Natriumionen, der nicht mehr als 5mg pro Liter beträgt, gekennzeichnet.

Für die Therapie der essentiellen Hypertonie ist neben den Pharmaka auch eine natriumarme Ernährung von zentraler Bedeutung. Kochsalzarme Diäten sind bekannt und werden zur Unterstützung der medikamentösen Therapie angewandt. Dabei ist zwischen der mässig und der strikt natriumarmen Diät zu unterscheiden. Die strikt natriumarme Diät wird als eigentliche therapeutische Massnahme eingesetzt.

Für eine strikt natriumerme Diät ist die Beachtung der Natrium-Mengen nicht nur in der festen Nahrungsmitteln, sondern auch in den flüssigen Anteilen der täglichen Nahrung wesentlich. Diesem Punkt der flüssigen Nahrungsbestandteile, wird allgemein zu wenig Beachtung geschenkt. Die Durchführung und Einhaltung einer strikt natriumarmen Diät ist beim heutigen Angebot an Getränken und flüssigen Nahrungsmitteln praktisch nicht möglich. Dies fürt dazu, dass die strikt natriumarme Diät oft unzulänglich praktiziert wird und nicht die erwünschten Resultate erbringt.

Eine konsequent durchgeführte, strikt natriumarme Diät bietet jedoch ein beachtenswertes, therapeutisches Instrument. Neuere medizinisch-physiologische Erkenntnisse über die Auswirkungen von Natrium im Intermediär-Stoffwechsel weisen wieder vermehrt auf eine strikt natriumarme Diät als die ausschlaggebende Therapie nicht nur bei Hypertonie, sondern auch bei Erkrankungen des peripheren arteriovenösen und lymphatischen Systems sowie bei Mikrozirkulationsstörungen hin. Im weiteren führt eine strikt natriumarme Ernährung zu Malabsorptionserscheinungen für verschiedene Nährstoffe, namentlich auch für Glukose, sodass eine solche Diät mit beaufsichtigten Kalorienreduktionsdiäten als auch mit Diabetesdiäten sinnvoll kombiniert werden kann.

Da Natrium auf industriell verarbeiteter Nahrung (Konserven) meistens nicht deklariert ist, kann der Konsument die in den Lebensmitteln vorhandenen Natrium-Mengen nicht erkennen. Diätetische Massnahmen werden deshalb oft durch unerkannte und daher nicht beachtete Mengen an Natrium zunichte gemacht. Insbesondere nimmt der Mensch durch die verschiedenen Getränke und flüssigen Lebensmittel bereits einen wesentlichen Teil des täglichen Natriumbedarfs zu sich. So enthalten Tafelgetränke wie Mineralwasser, Bier und Wein Natrium in Konzentrationen von zum Teil wesentlich mehr als 100 Milligramm pro Liter. Durch Natrium/Calcium-Ionenaustauscher enthärtetes Wasser enthält oft mehr als 50mg/Liter Natrium. Milch z.B. enthält 480mg Natrium pro Liter.

Allein im Trinkwasser, das direkt als Tafelgetränk oder für Kaffee, Tee, Suppen, Saucen usw. verwendet wird, liegt Natrium je nach Landesgegend in den erheblichen Mengen von 20 und mehr Milligramm pro Liter vor. Deshalb können natriumarme, flüssige Lebensmittel, bzw. Getränke, Suppen, Saucen usw. nicht mit diesem Trinkwasser hergestellt werden, wenn das fertige Produkt den Anforderungen einer strikt natriumarmen Diät genügen soll.

### Bisheriger Stand der Technik:

Neben den selten vorkommenden Quellwässern mit extrem niedrigem Natriumgehalt sind verschiedene Patentansprüche für die Herstellung von natriumfreien Wässern bekannt.

US Patent 3 215 626 (Console) erhebt Anspruch auf ein Trinkwasser mit einem extrem niedrigen Natriumgehalt von nicht mehr als 0.1 mg pro Liter (0.1 p.p.m.). Als Komponenten dieses Wassers werden ausschliesslich Mineralien wie Eisen, Kalium, Ammonium, Chlorid und Phosphate in einer totalen Menge von höchstens 1 mg pro Liter genannt. Das Wasser kann zudem mit Ozon versetzt sein.

GB Patent 1 457 968 (De la Hoz Fabra et al.) nennt ein Trinkwasser, welches vollständig (?) frei von Natrium ist, dagegen aber verschiedene andere Mineralien in bestimmten Konzentrationen enthält (Kalium, Lithium, Calcium, Ammonium, Magnesium, Chlorid, Carbonat). Zudem werden Lactat, Acetat sowie Lactose und spezifische Pflanzenextrakte als Komponenten genannt.

Im weiteren liegen Patentschriften vor, die Getränke mit spezifischen Elektrolyt-Zusammensetzungen nennen, die aber nicht Anspruch auf einen niedrigen Gehalt an Natrium erheben (BRD Patent 26 42 632; BRD Patent 29 06 697; GB Patent 1 499 984; GB Patent 2 037 565 A). Diese Patente erheben somit auch keinen Anspruch, dass die erzeugten Präparate als Diätgetränke bei natriumfreier Ernährung angewandt werden.

### Beschreibung der neuen Erkenntnisse:

Ueberraschenderweise muss festgestellt werden, dass ausser den oben genannten, technisch erzeugten, natriumarmen Mineralwässern und einiger vereinzelt in der Natur vorkommender, natriumarmer Quellwässern keine für den Menschen zuträglichen Getränke und keine nährstoffhaltigen, flüssigen Lebensmittel existieren, deren Natrium-Gehalt nicht mehr als 5 mg pro Liter beträgt.

Zweck der vorliegenden Erfindung ist es, verschiedene Ausführungen an flüssigen

bensmitteln mit einem Natrium-Gehalt, der nicht mehr als 5 mg pro Liter beträgt, herzustellen und diese für die Durchführung und Einhaltung einer strikt natriumarmen Diät anzuwenden. Damit wird der Tatsache Rechnung getragen, dass die nachstehend umschriebenen Produkte bis heute nicht hergestellt werden und nicht verfügbar sind:

Flüssige und in vorgegebenem Sinn natriumarme Lebensmittel, die nicht nur aus Wasser und Mineralsalzen wie reine Mineralquellwässer bestehen, sondern zudem auch Nährstoffe wie Proteine, Kohlehydrate oder Lipide enthalten. Nährstoffhaltige, natriumarme, flüssige Lebensmittel, bzw. Getränke, die Süssstoffe, Aromastoffe oder Blütenextrakte (z.B. Nektar), oder Fruchtsäfte und Fruchtextrakte (z.B. Limonaden, Sirupe usw.) enthalten. Insbesondere auch natriumarme, wenig nährstoffhaltige Getränke, die auch alkoholische Pflanzenextrakte und Destillate derselben enthalten. An wässrigen Pflanzenextrakten wurden im Zusammenhang mit natriumarmen, flüssigen Lebensmitteln die verschiedensten Arten von Tee (aus Blättern, Blüten, Fruchtschalen, Heilkräutern und Gewürzen) bisher ebenfalls nicht erwähnt.

Im weiteren existieren auch keine natriumarmen, flüssigen Lebensmittel in Form von Suppen (z.B. Fleisch- und Geflügelbouillons, usw.) oder fertigen, flüssigen Saucen (Fleischextrakte mit Mineralsalzen und Gewürzen), die sich für eine strikt natriumarme Diät empfehlen liessen. Ferner gibt es keine natriumarmen, flüssigen Süßspeisen (z.B. süsse Saucen) oder wässrige und gefrorene Süssspeisen (z.B. Sorbets, Glacen, usw.).

Vollständig frei von Natrium können solche flüssigen Lebensmittel, selbst wenn demineralisierte Komponenten an Aroma- und Nährstoffen verwendet werden, praktisch nicht sein. Natrium liegt derart ubiquitär vor, dass natürliche, in technischem Maßstab gewonnene Aromastoffe und Extrakte nicht analytisch frei von diesem Element sind. Unsere Erfahrung hat aber gezeigt, dass sich solche flüssigen Lebensmittel mit nicht mehr als 5 mg Natrium pro Liter mit einem angemessenen technischen Aufwand herstellen lassen. Für gewisse Zusammensetzungen sind wesentlich geringere Natriumkonzentrationen als 5 mg/Liter möglich, namentlich dann, wenn analytisch reine Aromastoffe oder Destillate von alkoholischen oder wässrigen Extrakten eingesetzt werden können.

Der Gegenstand der Erfindung ist ein Glüssiges Lebensmittel bestehend aus Wasser und Mineralsalzen, dadurch gekennzeichnet, dass es durch den Zusatz von weitgehend natriumfreien Proteinen und/oder Kohlehydraten und/oder Lipiden nährstoffhaltig gemacht ist, und dass sein Gehalt an Natriumionen nicht mehr als 5 mg pro Liter beträgt.

Besondere Ausfürungsarten der Erfindung erscheinen in den abhängigen Ansprüchen.

## Weg zur Ausführung der Erfindung (1. Beispiel):

Zur Herstellung solcher natriumarmer, flüssiger Lebensmittel kann der folgende Weg beschritten werden: Trinkwasser wird nach bekannten Verfahren wie Umkehrosmose, Ionenaustauschung, Elektrodialyse oder Destillation natriumfrei gemacht. Anschliessend werden die für die Bekömmlichkeit des Produktes erforderlichen, weitgehend natriumfreien Stoffe (Mineralsalze, künstliche und natürliche Süßstoffe, Aromastoffe, Extrakte oder reine Präparate an Proteinen, Kohlehydraten und Lipiden, wässrige oder alkoholische Extrakte und Destillate aus Blättern, Blüten, Früchten, Kräutern und Gewürzen) quantitativ exakt zugemischt. Das Versetzen solcher Produkte mit Kohlendioxid oder anderen Gasen oder Säuren zum Zwecke der Geschmacksverbesserung oder der Stabilisierung der Getränke oder Brühen, als auch die Sterilfiltration unmittelbar vor dem Abfüllen in verschliessbare Behältnisse, können nach bekannten Verfahren erfolgen.

## Weg zur Ausführung der Erfindung (2. Beispiel):

Ein weiterer Weg für die Herstellung solcher natriumarmer, flüssiger Lebensmittel besteht darin, dass bekannte Getränke und flüssige Nahrungsmittel wie Wein, Apfelsaft, Limonaden, Bier, Suppen, Brühen, usw. über geeignete Apparaturen wie z.B. Elektrodialyse, Umkehrosmose, Kationenaustauscher, usw. natriumfrei und anschliessend durch entsprechende Geschmackskorrektur wieder angenehm und bekömmlich gemacht werden.

## Patentansprüche

1. Flüssiges Lebensmittel bestehend aus Wasser und Mineralsalzen, dadurch gekennzeichnet, dass es durch den Zusatz von weitgehend natriumfreien Proteinen und/oder Kohlehydraten und/oder Lipiden nährstoffhaltig gemacht ist, und dass sein Gehalt an Natriumionen nicht mehr als 5 mg pro Liter beträgt.

2. Flüssiges Lebensmittel nach Anspruch 1, dadurch gekennzeichnet, dass es durch den Zusatz von weitgehend natriumfreien Fleischextrakten und/oder Geflügelextrakten und/oder Fischextrakten eine nährstoffhaltige Brühe (Suppe) oder Trinkbouillon ist.

3. Flüssiges Lebensmittel nach Anspruch 1, dadurch gekennzeichnet, dass es durch den Zusatz von weitgehend natriumfreien Gewürzen schmackhaft gemacht ist.

4. Flüssiges Lebensmittel nach Ansprüchen 2 und 3, dadurch gekennzeichnet, dass der Flüssigkeitsanteil so gering ist, dass es sich um eine flüssige Sauce zum Würzen der Speisen handelt.

5. Flüssiges Lebensmittel nach Anspruch 1, dadurch gekennzeichnet, dass es durch den Zusatz von weitgehend natriumfreien, natürlichen und/oder künstlichen Süss- und/oder Aromastoffen schmackhaft gemacht ist.

6. Flüssiges Lebensmittel nach Anspruch 1, dadurch gekennzeichnet, dass es durch den Zusatz von weitgehend natriumfreien, wässrigen und/oder alkoholischen Extrakten und Destillaten aus Pflanzenblüten und/oder Pflanzenblättern und/oder Früchten und/oder Nüssen und/oder Kernen und/ oder Wurzeln und/oder Pilzen schmackhaft gemacht ist.

7. Flüssiges Lebensmittel nach Anspruch 1, dadurch gekennzeichnet, dass es durch den Zusatz von natürlichen Metaboliten wie Citrat, Succinat, Fumarat, Malat, usw. schmackhaft gemacht ist.

8. Flüssiges Lebensmittel nach Anspruch 1, dadurch gekennzeichnet, dass es durch den Zusatz von $CO_2$ und/oder organischen Säuren stabilisiert und schmackhaft gemacht ist.

9. Flüssiges Lebensmittel nach Anspruch 5, dadurch gekennzeichnet, dass der Flüssigkeitsanteil so gering ist, dass es sich als Sauce zum Süssen der Speisen oder zur Herstellung von Ice-Cremes eignet.

10. Flüssiges Lebensmittel nach den Ansprüchen 1 - 9 zur Einhaltung einer strikt natriumarmen Diät.

**Claims**

1) A liquid foodstuff, composed of water and mineral salts, thereby characterized in that it contains nutrients by adding proteins and/or carbohydrates and/or lipids, which are essentially free of sodium, - and that its content of sodium ions does not exceed 5 mg per litre.

2) A liquid foodstuff according to claim 1, thereby characterized in that it is a soup or broth (bouillon), containing nutrients by adding extracts of meat and/or extracts of poultry meat and/or extracts of fish, which are essentially free of sodium.

3) A liquid foodstuff according to claim 1, thereby characterized in that it is flavoured by adding spices, in taste-enhancing amounts, which are essentially free of sodium.

4) A liquid foodstuff according to claims 2 and 3, thereby characterized in that the fluid portion is at such a low level that it is a liquid sauce for seasoning food.

5) A liquid foodstuff according to claim 1, thereby characterized in that it is flavoured by adding natural and/or artificial sweeteners and/or aromatics, which are essentially free of sodium.

6) A liquid foodstuff according to claim 1, thereby characterized in that it is flavoured by adding aqueous and/or alcoholic extracts and distillates from blossoms and/or leaves of plants and/or fruits and/or nuts and/or kernels and/or roots and/or mushrooms, essentially free of sodium.

7) A liquid foodstuff according to claim 1, thereby characterized in that it is flavoured by adding natural metabolites such as citrate, succinate, fumarate, malate etc.

8) A liquid foodstuff according to claim 1, thereby characterized in that it is stabilized and flavoured by adding $CO_2$ and/or organic acids.

9) A liquid foodstuff according to claim 5, thereby characterized in that the fluid portion is at such a low level that it is suitable as a sauce for sweetening food or for the preparation of ice-creams.

10) A liquid foodstuff according to claims 1 to 9 destined to follow a diet regimen, extremely low in sodium.

**Revendications**

1. Aliment liquide composé d'eau et de sels minéraux, caractérisé par l'adjonction d'éléments nutritifs sous forme de protéines et (ou) de glucides et (ou) de lipides exempts en grande partie de sodium, et par une teneur en ions de sodium ne dépassant pas 5 mg par litre.

2. Aliment liquide selon revendication 1, caractérisé par l'adjonction d'extraits de viande et (ou) de volaille et (ou) de poisson, et ainsi transformé en une soupe ou un bouillon contenant des principes nutritifs.

3. Aliment liquide selon revendication 1, caractérisé par l'adjonction de condiments exempts en grande partie de sodium qui lui donnent sa saveur.

4. Aliment liquide selon revendications 2 et 3, caractérisé par une proportion de liquide suffisamment faible pour en faire une sauce liquide servant à assaisonner les aliments.

5. Aliment liquide selon revendication 1, caractérisé par l'adjonction d'édulcorants et (ou) d'aromatisants naturels et (ou) artificiels, exempts en grande partie de sodium qui lui donnent sa saveur.

6. Aliment liquide selon revendication 1, caractérisé par l'adjonction d'extraits et de distillats aqueux et (ou) alcooliques, exempts en grande partie de sodium, provenant de fleurs et (ou) de feuilles, de noix et (ou) de noisettes, de noyaux et (ou) de pépins, de racines et (ou) de champignons, et (ou) de fruits, qui lui donnent sa saveur.

7. Aliment liquide selon revendication 1, caractérisé par l'adjonction de métabolites naturels tels que le citrate, le succinate, le fumarate, le malate, etc., qui lui donnent sa saveur.

8. Aliment liquide selon revendication 1, caractérisé par l'adjonction de $CO_2$ et (ou) d'acides organiques qui le stabilisent et lui donnent sa saveur.

9. Aliment liquide selon revendication 5, caractérisé par une proportion de liquide suffisamment faible pour en faire une sauce servant à sucrer les mets ou se prêtant à la confection de glaces comestibles.

10. Aliment liquide selon revendications 1 à 9 permettant de suivre un régime strict pauvre en sodium.